Europäisches Patentamt

European Patent Office

Office européen des brevets

(11) Publication number: **0 447 044 A1**

# EUROPEAN PATENT APPLICATION

(21) Application number: 91301392.6

(51) Int. Cl.⁵: **C25D 3/56**, G01L 3/10

(22) Date of filing: 21.02.91

(30) Priority: **23.02.90 US 485869**

(43) Date of publication of application:
**18.09.91 Bulletin 91/38**

(84) Designated Contracting States:
**DE ES FR GB IT SE**

(71) Applicant: **EATON CORPORATION**
**Eaton Center**
**Cleveland Ohio 44114(US)**

(72) Inventor: **Schachameyer, Steven Roy**
**1415 East Clay Street**
**Milwaukee, Wisconsin 53217(US)**
Inventor: **Beihoff, Bruce Charles**
**816 N. 66th Street**
**Wauwatosa, Wisconsin 53213(US)**

(74) Representative: **West, Alan Harry et al**
**R.G.C. Jenkins & Co. 26 Caxton Street**
**London SW1H 0RJ(GB)**

(54) **Magneto-elastic film and process.**

(57) A cobalt-iron alloy magneto-elastic film having from about 20 to about 40 atomic weight % iron is provided. The film exhibits an especially attractive magnetostriction coefficient as well as being essentially crack-free in addition to exhibiting good adhesive characteristics. The film is preferably made by electro-deposition upon a substrate immersed in an electrolyte bath of particular composition and is especially useful in sensors such as torque strain sensors (50).

Fig. 1

This application is a continuation-in-part of U.S. Patent Application Serial Number 318,991, filed on March 6, 1989.

TECHNICAL FIELD

This invention relates generally to magneto-elastic film and its preparation and use and more particularly to a cobalt and iron containing magneto-elastic film, its preparation from an electrolyte composition, and its use in a strain sensor, particularly a torque-induced strain sensor.

BACKGROUND OF THE INVENTION

Magneto-elastic films have been known for many years. Such films characteristically contain ferromagnetic materials such as iron and cobalt or iron and nickel and are commonly made by depositing the films upon substrates by physical vapor deposition techniques.

Magneto-elastic films undergo both dimensional and magnetization changes upon imposition of mechanical stress and/or a magnetic field. As such, they are commonly characterized according to their particular magnetostriction coefficient expressed in micro-inches/inch (u-in/in). Generally, the higher the manetostriction coefficient, the greater the elasticity of the film. Increasing elasticity of the film characteristically broadens its strain-monitoring or sensing-range capability or both as well as increasing its sensitivity to small changes. A magnetostriction coefficient of about 50 u-in/in has been found to be suitable for any torque or pressure sensing applications for magneto-elastic film.

In strain sensor applications, it is essential that magneto-elastic films adhere well to the substrate upon which they are deposited in a broad range of thicknesses (commonly up to about 10 mils) and that they exhibit good cohesion, uniformity, and be essentially stress-and crack-free.

Heretofore a problem has existed in providing a uniform, virtually crack-free, cobalt-iron containing magneto-elastic film exhibiting good adhesion and an attractive magnetostriction coefficient when deposited upon a selected substrate by an electro-deposition process from an electrolyte composition.

SUMMARY OF THE INVENTION

Accordingly, it is an object of this invention to provide an electrolyte composition operable to provide a uniform, iron-containing, magneto-elastic film having an attractive magnetostriction coefficient so that small changes in torque may be observed.

It is still another object of this invention to provide a uniform, cobalt-iron containing, magneto-elastic film from an electrolyte composition that exhibits good adhesion to the substrate upon which it is deposited, is essentially stress and crack-free, and exhibits an attractive magnetostriction coefficient.

It is still another object of this invention to provide a strain sensor employing a cobalt-iron-containing magneto-elastic film that is uniform and essentially stress and crack-free and exhibits an attractive magnetostriction coefficient.

It is yet still another object of the present invention to provide a process for electrodepositing the specified electrolyte composition as a film onto the strain sensor which achieves a film with superior properties.

BRIEF DESCRIPTION OF THE DRAWINGS

FIGURE 1 is a side elevation view of an embodiment of a torque strain sensor using the magneto-elastic film of the invention;

FIGURE 2 is a partial side elevation view of a shaft having oriented patterns of the magneto-elastic film of the invention deposited thereupon; and

FIGURE 3 is a side elevation view of a shaft having oriented patterns of the magneto-elastic film of the invention deposited upon electrically conductive film adhered to the shaft.

DESCRIPTION OF SOME PREFERRED EMBODIMENTS

The magneto-elastic film of the present invention is a cobalt-iron alloy having rom about 20% to about 40% atomic weight percent iron. The film is preferably deposited upon a selected substrate by electroplating it onto the substrate whilst immersed in an electrolyte bath composition of the present invention.

It has been discovered that a complex combination of constituents in addition to those containing iron or cobalt is essential in providing electro-deposited magneto-elastic films that exhibit good adhesion to the substrate and exhibit attractive magneto-striction coefficients.

The electrolyte composition of the present invention is prepared by adding the following constituents to a liter of water within the range indicated in following TABLE I:

## TABLE I

| Constituent | Range | |
| --- | --- | --- |
| | From About | To About |
| hydrated cobalt sulfate ($CoSO_4*7H_2O$) | 40 gm | 70 gm |
| hydrated cobalt chloride ($CoCl_2*6H_2O$) | 150 gm | 250 gm |
| boric acid | 40 gm | 60 gm |
| hydrated ferrous sulfate ($FeSO_4*7H_2O$) | 50 gm | 100 gm |

As a more preferred composition, various additives are added to the electrolyte composition. The preferred types and amounts of the additives are given in Table I. The addition of the additives effects the physical properties of the film and provides films which are essentially uniform and stress-, crack-, and void-free.

The constituents consist of cobalt sulfate, cobalt chloride, boric acid and ferrous sulfate. Either the dehydrated versions or the hydrated versions of the cobalt sulfate, the cobalt chloride, and the ferrous sulfate may be used. The compound may essentially have any level of hydration, as the hydration level is not critical. The amounts reported,however, are based on the following hydrated versions: $CoSO_4*7H_2O$, $CoCl_2*6H_2O$, and $FeSO_4*7H_2O$, as these are the common forms of these compounds. In addition, at least one wetting agent and at least one disperser may be included in the electrolyte bath composition to enhance the properties of the deposited film. Preferably, the wetting agent(s) consist of anionic surfactants, and the dispersing agent is preferably based on a sodium lauryl sulfonate wetting agent. In addition, it may also be advantageous to incorporate a carboxylic acid mixture to act as a stabilizer, a carrier salt solution including about 10-25% saccharin solution, alkene sulfonate and a secondary brightener which may consist of an alkoxylated epichlorohydrin derivative.

An even more preferred range and specific numbers for the constituent amounts in the electrolyte composition of the invention is shown in following Table II.

## TABLE II

| Constituent | Range (per liter of water) | | |
|---|---|---|---|
| | From About | To About | Preferred |
| hydrated cobalt sulfate ($CoSO_4 * 7H_2O$) | 45 gm | 68 gm | 60 |
| hydrated cobalt chloride ($CoCl_2 * 6H_2O$) | 170 gm | 220 gm | 195 |
| boric acid | 40 gm | 56 gm | 45 |
| hydrated ferrous sulfate ($FeSO_4 * 7H_2O$) | 50 gm | 100 gm | 50-100 |
| carboxylic acid mixture | 10 gm | 15 gm | 12.5 |
| saccharin solution (10-25%) | 15 ml | 35 ml | 30 |

| Constituent | Range (per liter of water) | | |
|---|---|---|---|
| | From About | To About | Preferred |
| alkene sulfonate | 15 ml | 25 ml | 20 |
| alkoxylated epichlorohydrin | 1 ml | 3 ml | 1 |
| lauryl sulfonate | 0.5 ml | 1.5 ml | 1 |
| anionic surfactant | 3 ml | 9 ml | 6 |

An illustrative example of preferred parameters for electro-elastic film placed onto a part immersed in an electrolyte bath having the composition of Table Ii in which the anodes are positioned equidistant from all cathode surfaces and the electrolyte is agitated by mechanical action is shown in the following Table III.

## TABLE III

| Parameter | Range | Optimum |
|---|---|---|
| Electrolyte Temperature (°F) | 116-130 | 118-122 |
| Part Agistation (RPM) | 10-100 | 40 |
| Voltage (DC) | 1-10 | 6-8 |
| Current density (ASF) | 10-110 | 40-50 |
| Deposition rate (Mils per Hour) | 1-8 | 3-4 |

The normal, or conventional, procedure used in electrodeposition process is to plate with uninterrupted DC current until so many coulombs (amp-sections) have passed to yield some desired thickness of coating. The technique of the present invention involves that and in addition, the use of pulsed or controllably interrupted current.

Circuitry designed to interrupt the current in microseconds is preferred. The duty cycle can vary from 20% to 75% "on" time, althrough the preferred duty cycle is 1:3, the current being "on" 25% of the time and "off" for 75% of the time. The interruption of the plating process is speculated to yield the benefit of depositing material with smaller than normal grain size compared to uninterrupted DC plating. This effect may be caused by the induced creation of new nucleation sites. The cessation of current stops growth of a particular grain and the re-application of the current does not necessary re-initiate growth at the same site.

A further improvement in the chemical uniformity of the film has been noted in the material properties associated with films deposited by pulsed deposition. During the "off" time, the plating solution immediately adjacent to the cathode surface is allowed to return to bulk concentration of the constituents in the electrolyte. This near-surface layer of solution is depleted during the "on" portion of the cycle, the effect of which may be to adversely effect deposit uniformity.

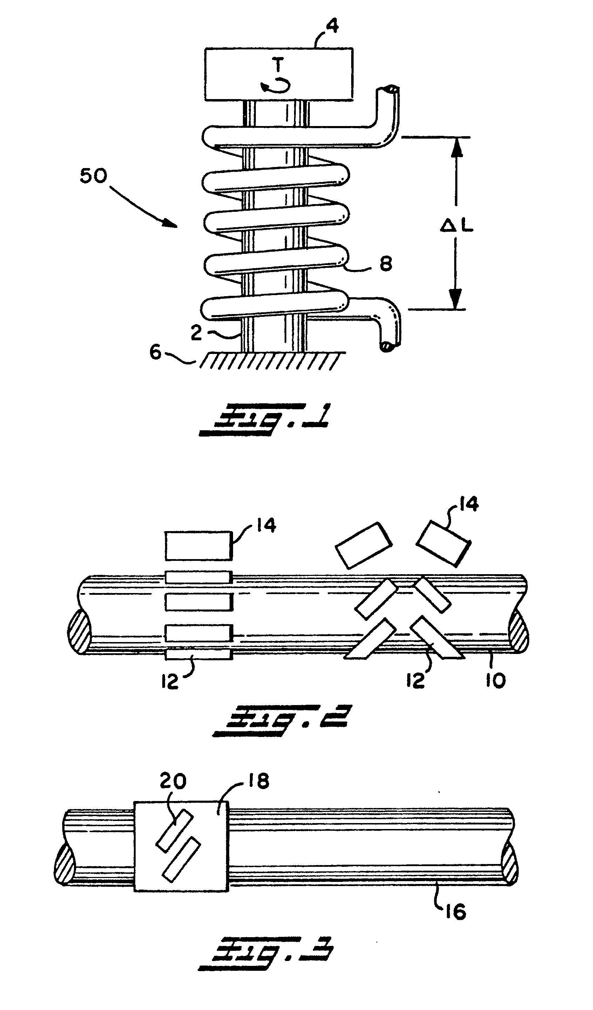

An example of a sensor using the cobalt-iron alloy magneto-elastic film of the present invention is torque sensor 50 shown in Figure 1 for which it has been found that an iron concentration of about 26% for the electrolyte composition is advantageously optimum. Sensor 50 has a shaft member 2 having the magneto-elastic film of the present invention of about 2-10 mils thickness electroplated onto its outer surface from the electrolyte composition of the present invention herein described. One end of shaft 2 is secured to a stationary foundation or frame referenced by numeral 6 and the opposite end of shaft 2 is fixedly secured to an object 4 to which a torque "T" is being applied and it is desired to monitor the amount. Shaft 2 is surrounded by a coiled ferromagnetic electrical conductor 8. In operation, twisting of shaft 2 by torque "T" causes the magneto-elastic film on the surface of shaft 2 to stretch which in turn changes its magnetic characteristics which affect the magnetic field about coiled conductor 8 and induces a change in inductance thereacross that is correlatable to the torque being applied to object 4. The cobalt-iron alloy magneto-elastic films of the present invention contain from about 20 to about 40 atomic weight percent iron, exhibit excellent adhesion characteristics and uniformity, and are essentially stress and crack-free in addition to providing attractive magneto-striction coefficients commonly around 50 u-in/in and potentially as high or even higher than 130 u-in/in.

As shown in Figures 2 and 3, the magneto-elastic film of the invention does not have to cover the entire surface of a substrate to which it is adhered but may be in the form of one or more discrete segments, such as segments 12, adhered to shaft 10 at various orientations, such as parallel (for measuring tensile and compressive strain or at an acute angle such as 45° to the central axis of shaft 10 for measuring torque strain, as shown in Figure 2. In such instances, a magnetic detector 14, well known to those skilled in the art, can be utilized to measure magnetic changes occurring in film 12 as a result of strain arising from stresses imposed upon shaft 10.

Figure 3 shows an example where segments of magneto-elastic film 20 of the invention are not adhered directly to shaft 16 but rather to an electrically conductive film 18 disposed therebetween that is bonded to shaft 16. Magnetic changes occurring in film 20 in combination with conductive film 18 are detected by suitable magnetic detectors well known to those skilled in the art.

Patterned segment arrangements of magneto-elastic film of the invention shown in Figure 2 enable the tailoring of magnetic flux paths to enhance a change in magnetic inductance per unit of stress being applied to the member under test.

Additionally, a combination of an electrically conductive film and the magneto-elastic film of the invention, such as shown in Figure 3, provides enhanced modulation of total magnetic induction as well as concentrating magnetic flux to provide greater changes in the inductive field and thereby improve measurability of changes in the magnetic field arising from stresses imposed upon the member being tested.

A further discussion of the types of torque sensors which may employ the magneto-elastic films of this invention may be found in U.S. Patent No. 4,852,411 to Beihoff, which patent is hereby incorporated by reference.

While our invention has been described in terms of a specific embodiment, it will be appreciated that other embodiments could readily be adapted by one skilled in the art. Accordingly, the scope of the invention is to be limited only by the following claims.

## Claims

1. An electrolyte composition for providing a cobalt-iron alloy magneto-elastic film having from about 20 to about 40 atomic weight percent iron, said composition comprising an additive amount of:
   from about 40 gm to about 70 gm, per liter of water, of hydrated cobalt sulfate;
   from about 150 gm to about 250 gm, per liter of water, of hydrated cobalt chloride;
   from about 40 gm to about 60 gm, per liter of water of boric acid; and
   from about 50 gm to about 100 gm, per liter of water, of hydrated ferrous sulfate.

2. The composition of claim 1, further comprising from about 2 ml to about 10 ml, per liter of water, of at least one wetting agent.

3. The composition of claim 1, further comprising from about 0.5 ml to about 2 ml, per liter of water, of at least one dispersing agent.

4. An electrolyte composition for providing a cobalt-iron alloy magneto-elastic film having from about 20 to about 40 atomic weight percent iron, said composition comprising an additive amount of:
   from about 40 gm to about 70 gm, per liter of water, of hydrated cobalt sulfate;
   from about 150 gm to about 250 gm, per liter of water, of hydrated cobalt chloride;
   from about 40 gm to about 60 gm boric acid, per liter of water,
   from about 50 gm to about 100 gm, per liter of water, of hydrated ferrous sulfate;
   from about 10 to about 20 gm, per liter of water, of a complex carboxylic acid mixture;
   from about 10 ml to about 40 ml, per liter of water, of a saccharin based carrier consisting of 10-25% by weight saccharin solution;
   from about 10 ml to about 30 ml, per liter of water, of alkene sulfonate;
   from about 1 ml to about 5 ml, per liter of water, of a secondary brightener consisting of an alkoxylate;
   from about 0.5 ml to about 2 ml, per liter of water, of a disperser based on a sulfonated surfactant; and
   from about 2 ml to about 10 ml, per liter of water, of anionic surfactants.

5. The composition of claim 4 wherein:
   the amount of the hydrated cobalt sulfate is from about 45 gm to about 68 gm per liter of water;
   the amount of the hydrated cobalt chloride is from about 170 gm to about 220 gm per liter of water;
   the amount of boric acid is from about 40 gm to about 56 gm per liter of water;
   the carboxylic acid mixture amount is from about 10 gm to about 15 gm per liter of water;
   the saccharin based carrier amount is from about 15 ml to about 35 ml per liter of water;
   the amount of the alkene sulfonate is from about 15 ml to about 25 ml per liter of water;
   the amount of the secondary brightener is from about 1 ml to about 3 ml per liter of water;
   the amount of the disperser is from about 0.5 ml to about 1.0 ml per liter of water; and
   the amount of the anionic surfactant is from about 3 ml to about 9 ml.

6. The composition of claim 4 wherein:
the amount of the hydrated cobalt sulfate is about 60 gm per liter of water;
the amount of the hydrated cobalt chloride is about 195 gm per liter of water;
the amount of the boric acid is about 45 gm per liter of water;
the amount of the carboxylic acid mixture is about 12.5 grams per liter of water;
the amount of the saccharin based carrier is about 30 ml per liter of water;
the amount of the alkene sulfonate is about 20 ml per liter of water;
the amount of the secondary brightener is about 2.5 ml per liter of water;
the amount of the disperser is about 1 ml per liter of water; and
the amount of the anionic surfactant mixture is about 5 ml per liter of water.

7. An electrolyte composition for providing a cobalt-iron alloy magneto-elastic film having from about 20 to about 40 atomic weight percent iron, said composition comprising an additive amount per liter of water of:
from about 40 gm to about 70 gm cobalt sulfate as measured based on the weight of $CoSO_4{}^*7H_2O$;
from about 150 gm to about 250 gm cobalt chloride as measured based on the weight of $CoCl_2{}^*6H_2O$;
from about 40 gm to about 60 gm boric acid;
from about 50 gm to about 100 gm ferrous sulfate as measured based on the weight of $FeSO_4{}^*7H_2O$;
from about 10 gm to about 20 gm of a complex carboxylic acid mixture;
from about 10 ml to about 40 ml of a saccharin based carrier consisting of 10-25% by weight saccharin solution;
from about 10 ml to about 30 ml of alkene sulfonate;
from about 1 ml to about 5 ml of a secondary brightener consisting of an alkoxylate epichlorohydrin derivative;
from about 0.5 ml to about 2 ml of a disperser based on a lauryl sulfonate wetting agent; and
from about 2 ml to about 10 ml of anionic surfactants.

8. The composition of claim 7 wherein:
the amount of the cobalt sulfate is from about 45 gm to about 68 gm as measured based on the weight of $CoSO_4{}^*7H_2O$;
the amount of the cobalt chloride is from about 170 gm to about 220 gm as measured based on the weight of $CoCL_2{}^*6H_2O$; and
the amount of boric acid is from about 40 gm to about 56 gm.

9. A cobalt-iron alloy magneto-elastic film containing from about 20 to about 40 atomic weight percent iron, said film being deposited from the electrolyte composition of claim 1.

10. A cobalt-iron alloy magneto-elastic film containing from about 20 to about 40 atomic weight percent iron, said film being deposited from the electrolyte composition of claim 2.

11. A cobalt-iron alloy magneto-elastic film containing from about 20 to about 40 atomic weight percent iron, said film being deposited from the electrolyte composition of claim 3.

12. A cobalt-iron alloy magneto-elastic film containing from about 20 to about 40 atomic weight percent iron, said film being deposited from the electrolyte composition of claim 4.

13. A cobalt-iron alloy magneto-elastic film containing from about 20 to about 40 atomic weight percent iron, said film being deposited from the electrolyte composition of claim 7.

14. A strain sensor, said sensor employing a cobalt-iron alloy magneto-elastic film containing from about 20 to about 40 atomic weight percent iron, said film being deposited from the electrolyte composition of claim 1.

15. A strain sensor, said sensor employing a cobalt-iron alloy magneto-elastic film containing from about 20 to about 40 atomic weight percent iron, said film being deposited from the electrolyte composition of claim 2.

7

**16.** A strain sensor, said sensor employing a cobalt-iron alloy magneto-elastic film containing from about 20 to about 40 atomic weight percent iron, said film being deposited from the electrolyte composition of claim 3.

**17.** A strain sensor, said sensor employing a cobalt-iron alloy magneto-elastic film containing from about 20 to about 40 atomic weight percent iron, said film being deposited from the electrolyte composition of claim 4.

**18.** A strain sensor, said sensor employing a cobalt-iron alloy magneto-elastic film containing from about 20 to about 40 atomic weight percent iron, said film being deposited from the electrolyte composition of claim 7.

**19.** The sensor of claim 14, 15, 16, 17 or 18 wherein the strain is a torque induced strain.

**20.** A method of electrodepositing the electrolyte composition of claim 1, comprising:
electrodepositing by pulsing current through the electrolyte composition.

**21.** A method of electrodepositing the electrolyte composition of claim 2, comprising:
electrodepositing by pulsing current through the electrolyte composition.

**22.** A method of electrodepositing the electrolyte composition of claim 3, comprising:
electrodepositing by pulsing current through the electrolyte composition.

**23.** A method of electrodepositing the electrolyte composition of claim 4, comprising:
electrodepositing by pulsing current through the electrolyte composition.

**24.** A method of electrodepositing the electrolyte composition of claim 7, comprising:
electrodepositing by pulsing current through the electrolyte composition.

**25.** The method of claims 20, 21, 22, 23 or 24, wherein said electrodepositing by pulsing current is accomplished by pulsing the current on between 20 to 75% of the time, the balance of the time being off.

**26.** The method of claim 25, wherein said electrodepositing by pulsing current is accomplished by pulsing the current on for 25% of the time and off for 75% of the time.

4

T

50

8

ΔL

2

6

Fig.1

14

14

12

12

10

Fig.2

20

18

16

Fig.3

European
Patent Office

**EUROPEAN SEARCH
REPORT**

Application Number

**EP 91 30 1392**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 922 209  (PASSAL)<br>– – – | | C 25 D 3/56<br>G 01 L 3/10 |
| A | EP-A-0 293 107  (MAGNETIC PERIPHERALS)<br>– – – | | |
| A | CHEMICAL ABSTRACTS, vol. 97, no. 8, August 1982, page 483, abstract no. 63108q, Columbus, Ohio, US;<br>& CS-A-195 997 (V. LANDA et al.) 01-03-1982<br>– – – – – | | |

TECHNICAL FIELDS
SEARCHED (Int. Cl.5)

C 25 D 3/56

The present search report has been drawn up for all claims

| Place of search | Date of completion of search | Examiner |
|---|---|---|
| The Hague | 05 June 91 | VAN LEEUWEN R.H. |

CATEGORY OF CITED DOCUMENTS
X : particularly relevant if taken alone
Y : particularly relevant if combined with another
 document of the same catagory
A : technological background
O : non-written disclosure
P : intermediate document
T : theory or principle underlying the invention

E : earlier patent document, but published on, or after
 the filing date
D : document cited in the application
L : document cited for other reasons

&: member of the same patent family, corresponding
 document